# EUROPEAN PATENT APPLICATION

(11) **EP 4 513 242 A1**
(43) Date of publication of application: **26.02.2025**
(21) Application number: 23791477.5
(22) Date of filing: 25.01.2023
(51) Int. Cl.: G02B 6/36, B08B 1/04

(54) **OPTICAL CONNECTOR CLEANING DEVICE**

(30) Priority: 20.04.2022 JP 2022069327
(71) Applicant: NTT Advanced Technology Corporation, Tokyo 163-1436 (JP)
(72) Inventor: ARAI, Kenta, Tokyo 163-1436 (JP); HASHIMOTO, Etsu, Tokyo 163-1436 (JP)
(74) Representative: Samson & Partner Patentanwälte mbB
(86) International application number: PCT/JP2023/002224
(87) International publication number: WO 2023/203821

(57) **Abstract**

An optical connector cleaning device includes a strip-shaped cleaning element (101), a supply reel (102) around which the cleaning element (101) is wound, and a winding reel (103) configured to wind up the cleaning element (101). The optical connector cleaning device also includes a pad (104), and a pressing mechanism (105). The optical connector cleaning device also includes an attachment (108) arranged in an opening (107) formed in a housing (106) and configured to mechanically determine an amount of insertion of the pad (104) pressed in by an end face of an optical connector (131) such that a pressing that the end face of the optical connector (131) receives from the pad (104) falls within a predetermined range in accordance with a type of the optical connector (131). The optical connector cleaning device also includes a sensor mechanism (110) configured to detect that a displacement of the pad (104) is set in a state in which a predetermined pressing according to the type of the inserted optical connector (131) is generated.

## Description

### Technical Field

The present invention relates to an optical connector cleaning device configured to clean the coupling end face of an optical connector.

### Background Art

In recent optical communication, the speed and capacity are increasing along with the remarkable development of optical transmission techniques. In these techniques, degradation of transmission quality caused by dirt on an optical coupling portion poses a problem. For example, in an optical connector configured to easily and precisely couple optical fibers, optical coupling is implemented for fiber cores having a very small diameter of 10 µm in a state in which the coupling end faces of ferules fixing the optical fibers are made to face each other. For this reason, if dirt such as fat or dust sticks to the coupling end face of an optical connector, an increase of the insertion loss of the optical connector or a decrease of a return loss occurs, and an optical signal cannot normally be transmitted. Hence, it is important to clean a coupling end face of the optical connector and remove dirt or sticking substance.

To execute such cleaning, there is proposed an optical connector cleaning tool that exposes, from a cleaning window of a housing, a cleaning sheet tape extending from a supply reel to a winding reel and stored in the housing (patent literature 1). Dirt sticking to a coupling end face is removed by rubbing the coupling end face of an optical connector with the cleaning sheet tape exposed from the cleaning window.

### Related Art Literature

### Patent Literature

Patent Literature 1: Japanese Patent Laid-Open No. 2003-290722

### Disclosure of Invention

### Problem to be Solved by the Invention

However, in the above-described technique, the force of pressing the coupling end face against the cleaning sheet tape changes depending on the operator, and it is not easy to make the pressing force even. Hence, cleaning of the coupling end face may be insufficient because of a weak pressing force, or the cleaning sheet tape may be damaged by a too strong pressing force.

To solve this problem, it is conceivable to, for example, use a jig for fixing an optical connector to press the coupling end face of the optical connector against the cleaning sheet tape always by a predetermined pressing. However, the coupling end face of the optical connector, which is the cleaning target, does not necessarily have a predetermined area. For example, in a multicore optical connector, the area of the end face of the cleaning target is large. On the other hand, in a single-core optical connector, the area of the end face of the cleaning target is small. For this reason, if a predetermined pressing is used, on an end face with a large area, the pressing force may be weaker than in an appropriate state, and on an end face with a small area, the pressing force may be stronger than in an appropriate state. As described above, in the conventional technique, it is impossible to appropriately clean the coupling end face of an optical connector using a strip-shaped cleaning element such as a cleaning sheet tape.

The present invention has been made to solve the above-described problem, and has as its object to appropriately execute cleaning of the coupling end face of an optical connector using a strip-shaped cleaning element.

### Means of Solution to the Problem

According to the present invention, there is provided an optical connector cleaning device comprising a strip-shaped cleaning element, a supply reel around which the cleaning element is wound, a winding reel configured to wind up the cleaning element, a pad for pressing the cleaning element extending from the supply reel to the winding reel against an end face of an optical connector that is a cleaning target, a pressing mechanism formed by an elastic body configured to press the pad toward an end face of the optical connector, a housing accommodating the supply reel, the winding reel, the pad, and the pressing mechanism, an opening into which an end face side of the optical connector is inserted, the opening formed in the housing, an attachment arranged in the opening and configured to mechanically determine an amount of insertion of the pad pressed in by the end face of the optical connector such that a pressing that the end face of the optical connector receives from the pad falls within a predetermined range in accordance with a type of the optical connector, a cleaning element traveling mechanism configured to make the cleaning element travel, a sensor mechanism configured to detect that a displacement of the pad pressed in by the optical connector inserted from the opening is set in a state in which a predetermined pressing according to the type of the inserted optical connector is generated, and a controller configured to activate the cleaning element traveling mechanism if the sensor mechanism detects that the displacement of the pad that is pressed in has reached the state in which the predetermined pressing according to the type of the inserted optical connector is generated.

### Effect of the Invention

As described above, according to the present invention, since an attachment is used to mechanically determine the amount of insertion of a pad pressed in by an optical connector end face such that pressing that the end face of the optical connector receives from the pad falls within a predetermined range in accordance with the type of the optical connector, cleaning of the coupling end face of the optical connector using a strip-shaped cleaning element can appropriately be executed.

### Brief Description of Drawings

Fig. 1A is a view showing the configuration of an optical connector cleaning device according to the embodiment of the present invention;
Fig. 1B is a perspective view showing the configuration of a part of the optical connector cleaning device according to the embodiment of the present invention;
Fig. 2A is an explanatory view for explaining an example of the operation of the optical connector cleaning device according to the embodiment;
Fig. 2B is an explanatory view for explaining an example of the operation of the optical connector cleaning device according to the embodiment;
Fig. 3 is a view showing the configuration of a part of another optical connector cleaning device according to the embodiment of the present invention;
Fig. 4A is an explanatory view for explaining an example of the operation of another optical connector cleaning device according to the embodiment;
Fig. 4B is an explanatory view for explaining an example of the operation of another optical connector cleaning device according to the embodiment;
Fig. 5 is a graph showing the relationship of the restoring force of a spring with respect to a press-in amount in another optical connector cleaning device according to the embodiment;
Fig. 6A is a view showing the configuration of a part of another optical connector cleaning device according to the embodiment of the present invention;
Fig. 6B is an explanatory view for explaining an example of the operation of another optical connector cleaning device according to the embodiment;
Fig. 6C is an explanatory view for explaining an example of the operation of another optical connector cleaning device according to the embodiment;
Fig. 7 is a graph showing the relationship of the restoring force of a spring with respect to a press-in amount in another optical connector cleaning device according to the embodiment;
Fig. 8 is a view showing the configuration of a part of another optical connector cleaning device according to the embodiment of the present invention;
Fig. 9 is a graph showing the relationship between the displacement of a first spring 151 corresponding to the press-in amount of a pad 104 of the optical connector cleaning device described with reference to Fig. 8 and a voltage obtained by a pressor sensor 110';
Fig. 10 is a view showing the configuration of a part of another optical connector cleaning device according to the embodiment of the present invention; and
Fig. 11 is a graph showing the relationship between the displacement of each spring corresponding to the press-in amount of the pad 104 of the optical connector cleaning device described with reference to Fig. 10 and a voltage obtained by the pressor sensor 110'.

### Best Mode for Carrying Out the Invention

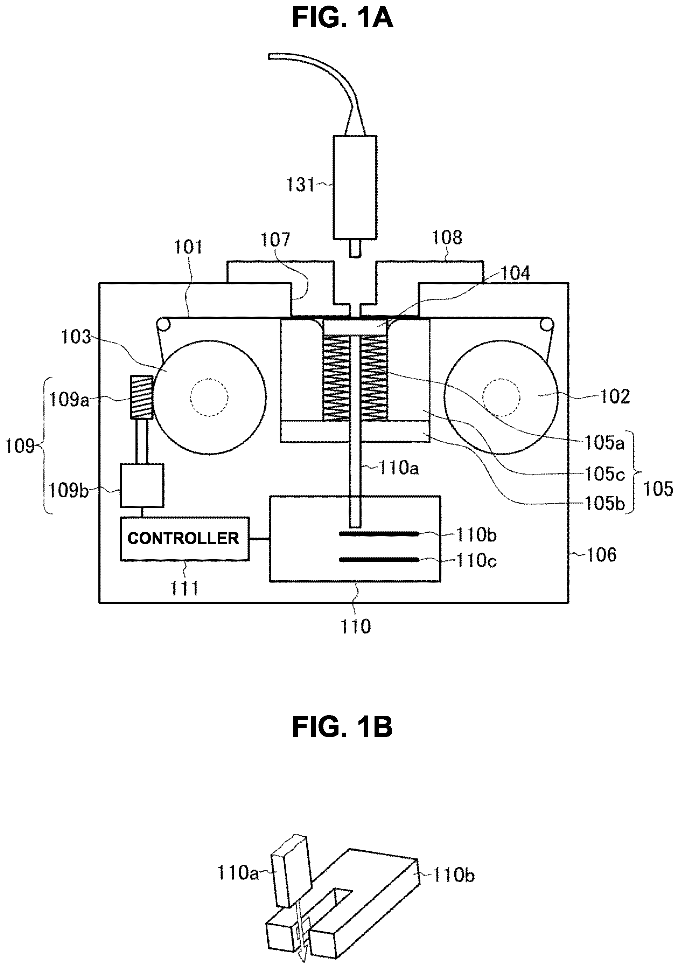

An optical connector cleaning device according to the embodiment of the present invention will now be described with reference to Figs. 1A and 1B. The optical connector cleaning device includes a strip-shaped cleaning element 101, a supply reel 102 around which the cleaning element 101 is wound, and a winding reel 103 that winds up the cleaning element 101. The cleaning element 101 is made of, for example, cloth.

Also, the optical connector cleaning device includes a pad 104 for pressing the cleaning element 101 extending from the supply reel 102 to the winding reel 103 against an end face of an optical connector 131 that is a cleaning target, and a pressing mechanism 105 formed by an elastic body 105a configured to press the pad 104 toward an end face of the optical connector 131. The elastic body 105a is, for example, a coil spring. The elastic body 105a is fixed on, for example, a base seat 105b. The periphery of the elastic body 105a can be covered with a cover 105c. The supply reel 102, the winding reel 103, the pad 104, and the pressing mechanism 105 described above are stored in a housing 106.

In the housing 106, an opening 107 into which an end face side of the optical connector 131 is inserted is formed. An attachment 108 is arranged in the opening 107. The attachment 108 mechanically determines the amount of insertion of the pad 104 pressed in by the end face of the optical connector 131 such that the pressing force that the end face of the optical connector 131 receives from the pad 104 falls within a predetermined range in accordance with the type of the optical connector 131. The attachment 108 is prepared for each type of the optical connector 131. The attachment 108 is, for example, fitted in the opening 107 and used. For example, the larger the area of the end face of the optical connector 131 is, the larger the attachment 108 makes the amount of insertion of the end face side of the optical connector 131.

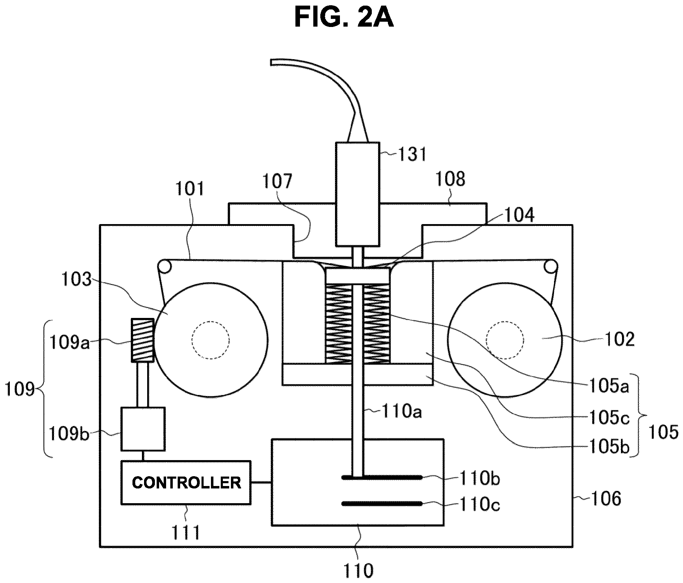

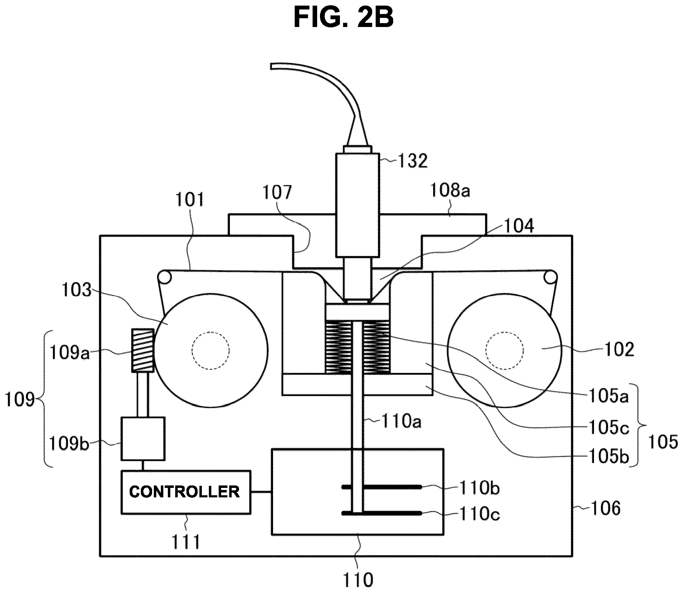

For example, there are prepared the attachment 108 for the single-core optical connector 131, and an attachment 108a for a multicore optical connector 132 (Figs. 2A and 2B).

Also, in this example, the optical connector cleaning device includes a cleaning element traveling mechanism 109 that makes the cleaning element 101 travel. The cleaning element traveling mechanism 109 includes a worm 109a, and a motor 109b that rotates the worm 109a. A worm wheel (not shown) is incorporated in the winding reel 103, and forms a worm gear in combination with the worm 109a. Rotation transmission of the motor 109b in the cleaning element traveling mechanism 109 is not limited to the above-described configuration, and, for example, a gear can be used.

The optical connector cleaning device also includes a sensor mechanism 110 configured to detect that the displacement of the pad 104 pressed in by the optical connector 131 inserted from the opening 107 is set in a state in which a predetermined pressing according to the type of the inserted optical connector of the inserted optical connector 131 is generated. If the sensor mechanism 110 detects that the displacement of the pad 104 that is pressed in has reached the state in which the predetermined pressing according to the type of the inserted optical connector of the inserted optical connector 131 is generated, a controller 111 activates the cleaning element traveling mechanism 109.

The sensor mechanism 110 can be, for example, a position detection sensor that detects a first detection position 110b and a second detection position 110c in a direction in which the pad 104 is pressed in. The sensor mechanism 110, for example, optically detects the distal end position of a bar 110a that moves interlocked with the displacement of the pad 104. Also, the sensor mechanism 110 can be, for example, a mechanical switch interlocked with the distal end along with the movement of the bar 110a. Note that the bar 110a is configured to detect, by the sensor mechanism 110, its displacement in the direction of pressing in the pad 104, but is not limited to this configuration. Also, the sensor mechanism can be formed by a pressure sensor.

An example of the operation of the optical connector cleaning device according to the above-described embodiment will be described next with reference to Figs. 2A and 2B. To clean the coupling end face of the optical connector 131 having an end face of a relatively small area (or a single core) (Fig. 2A), the corresponding attachment 108 is attached to the opening 107. In this state, the optical connector 131 is inserted into the attachment 108 and pressed in up to a position where the optical connector mechanically stops. Accordingly, the pad 104 which the coupling end face of the optical connector 131 is pressed against via the cleaning element 101 is pressed in to the state shown in Fig. 2A.

Also, at this time, the bar 110a is also pressed in interlocked with the press-in of the pad 104, the distal end of the bar 110a reaches the first detection position 110b, and the sensor mechanism 110 detects this state. As a result, the controller 111 activates the cleaning element traveling mechanism 109, winding of the cleaning element 101 by the winding reel 103 is started, and the cleaning element 101 travels. Thus, the coupling end face of the optical connector 131 is rubbed and cleaned by the cleaning element 101.

To clean the coupling end face of the optical connector 132 having an end face of a relatively large area (or a multicore) (Fig. 2B), the corresponding attachment 108a is attached to the opening 107. In this state, the optical connector 132 is inserted into the attachment 108a and pressed in up to a position where the optical connector mechanically stops. Accordingly, the pad 104 which the coupling end face of the optical connector 132 is pressed against via the cleaning element 101 is pressed in to the state shown in Fig. 2B.

Also, at this time, the bar 110a is also pressed in interlocked with the press-in of the pad 104, the distal end of the bar 110a reaches the second detection position 110c, and the sensor mechanism 110 detects this state. As a result, the controller 111 activates the cleaning element traveling mechanism 109, winding of the cleaning element 101 by the winding reel 103 is started, and the cleaning element 101 travels. Thus, the coupling end face of the optical connector 132 is rubbed and cleaned by the cleaning element 101.

As for the difference between the optical connector 131 and the optical connector 132, for example, these can automatically be discriminated by providing an electrical or mechanical identifier on each of the corresponding attachments 108 and 108a.

If the attachment 108a is used, the coupling end face of the optical connector 132 is intruded deeper, and the pad 104 is pressed in deeper as compared to a case of the attachment 108. In this case, since the elastic body 105a largely displaces as compared to a case of the optical connector 131 using the attachment 108, a larger restoring force acts on the pad 104. As a result, the force of pressing the cleaning element 101 by the pad 104 against the coupling end face of the optical connector 132 is larger than in the cleaning state of the optical connector 131 using the attachment 108.

As described above, according to the embodiment, since the amount of insertion of the end face side of the optical connector increases such that a predetermined pressing according to the type of the optical connector is generated in accordance with the area of the end face of the optical connector, it is possible to appropriately execute cleaning of the coupling end face of the optical connector using the strip-shaped cleaning element.

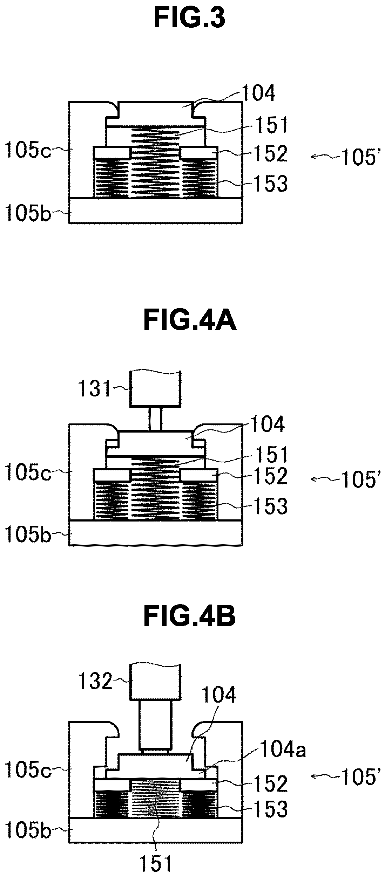

The configuration of another pressing mechanism 105' of the optical connector cleaning device according to the embodiment will be described next with reference to Fig. 3. The pressing mechanism 105' includes a first spring 151 configured to press the pad 104 toward the end face of the optical connector 131, a plate 152, and a second spring 153 configured to press the plate 152 toward the end face of the optical connector 131. A flange is provided on the lower surface of the pad 104, and an eaves-shaped stopper is provided at the inner upper edge of the cover 105c. The flange on the lower surface of the pad 104 engages with the stopper of the cover 105c, thereby preventing the pad 104 from jumping out beyond the position. The plate 152 can be provided to, for example, surround the periphery of the first spring 151. Also, the plate 152 may be provided at the center of the first spring 151 by replacing the positions of the first spring 151 and the second spring 153. The first spring 151 and the second spring 153 can each be formed by a plurality of springs.

As shown in Fig. 4A, if the single-core optical connector 131 is inserted using the corresponding attachment (not shown), the pad 104 which the coupling end face of the optical connector 131 is pressed against is pressed in. At this time, since the amount to press in the pad 104 is small, the pad 104 does not come into contact with the plate 152, and only a restoring force by the displacement of the first spring 151 acts on the pad 104.

As shown in Fig. 4B, if the multicore optical connector 132 is inserted using the corresponding attachment (not shown), the pad 104 which the coupling end face of the optical connector 132 is pressed against is pressed in. At this time, since the amount to press in the pad 104 is large, the pad 104 that is pressed in reaches a set position, the plate 152 contacts an outer periphery 104a of the back surface of the pad 104, and the plate 152 is pressed in. For this reason, not only the restoring force by the displacement of the first spring 151 but also a restoring force by the displacement of the second spring 153 acts on the pad 104.

As described above, if the single-core optical connector 131 is inserted using the corresponding attachment, only the restoring force by the displacement of the first spring 151 acts on the pad 104. If the multicore optical connector 132 is inserted using the corresponding attachment, not only the restoring force by the displacement of the first spring 151 but also the restoring force by the displacement of the second spring 153 acts on the pad 104.

As a result, the force of pressing the cleaning element 101 by the pad 104 against the coupling end face of the optical connector 132 is larger than in the cleaning state of the optical connector 131. Thus, since the amount of insertion of the end face side of the optical connector increases such that a predetermined pressing according to the type of the optical connector is generated in accordance with the area of the end face of the optical connector, it is possible to appropriately execute cleaning of the coupling end face of the optical connector using the strip-shaped cleaning element.

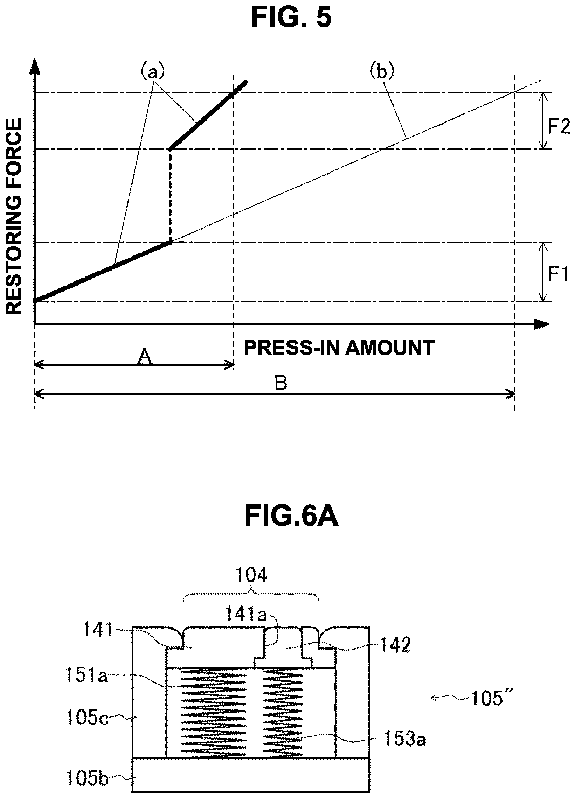

In the above-described configuration using two springs, the relationship of the restoring force with respect to the press-in amount is shown as a graph with a leap in the midway, as indicated by (a) in Fig. 5. In Fig. 5, (b) shows a configuration using only one spring. In Fig. 5, F1 represents the appropriate range of the force of pressing the cleaning element 101 by the pad 104 against the coupling end face of the single-core optical connector 131. F2 represents the appropriate range of the force of pressing the cleaning element 101 by the pad 104 against the coupling end face of the multicore optical connector 132.

In the configuration using two springs, the spring constant of each spring or pre-tension for generating a restoring force from the initial state by contracting a spring in advance is appropriately set, thereby making a press-in amount A smaller than a press-in amount B in a case where only a single spring is used. This also makes it possible to decrease the thickness of the pad. Also, in the configuration using two springs, since the difference of the press-in amount between the single-core optical connector 131 and the multicore optical connector 132 is small, the difference of the operation feeling according to the difference of the connector is small.

The configuration of still another pressing mechanism 105'' of the optical connector cleaning device according to the embodiment will be described next with reference to Fig. 6A. The pad 104 of the pressing mechanism 105'' is formed by a large first pad 141 and a small second pad 142. The first pad 141 is larger than the second pad 142, and the area of the first pad 141 in a planar view is larger than that of the second pad 142. The first pad 141 is provided with a hole 141a, the second pad 142 can fitted in the hole 141a, and the second pad 142 can enter/leave the hole 141a.

A flange is provided on the lower surface of the first pad 141. The flange of the first pad 141 engages with the stopper of the cover 105c, thereby preventing the first pad 141 from jumping out beyond the position. A flange is provided on the lower surface of the second pad 142 as well. If the flange of the second pad 142 engages with the stopper on the bottom portion of the hole 141a, and the first pad 141 is pressed down, the second pad 142 is pressed down together with the first pad 141. Thus, the second pad 142 can be pressed down independently of the first pad 141, and the second pad 142 is pressed down along with the press-down of the first pad 141.

The large first pad 141 is used for the multicore optical connector 132 with large pressing, and the small second pad 142 is used for the single-core optical connector 131 with small pressing. A first spring 151a configured to press the coupling end face of the connector 132 is provided on the lower surface of the first pad 141. Also, a second spring 153a configured to press the coupling end face of the optical connector 131 is provided on the lower surface of the second pad 142.

The first spring 151a is in contact with the lower surface of the first pad 141, and the second spring 153a is in contact with the lower surface of the second pad 142. Each of the first spring 151a and the second spring 153a can be formed by a plurality of springs to distributedly receive the force from the pad such that tilting hardly occurs when the pad is pressed.

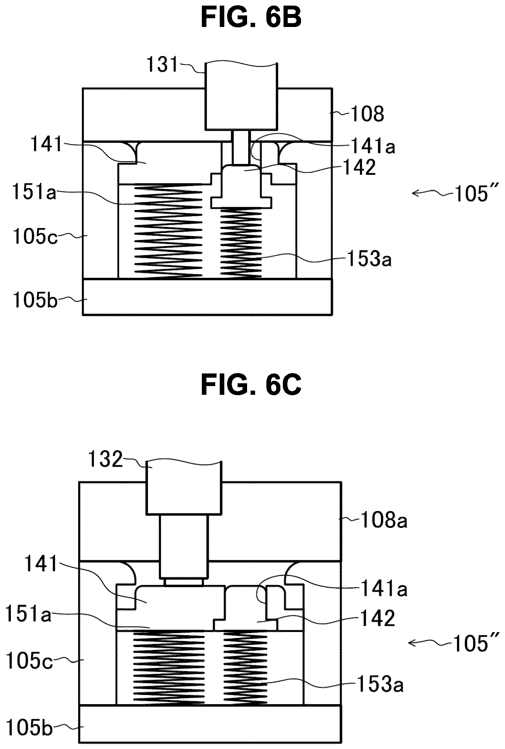

As shown in Fig. 6B, for example, if the single-core optical connector 131 is inserted using the corresponding attachment 108, since the attachment 108 is designed such that the coupling end face of the optical connector 131 contacts the second pad 142, the coupling end face of the optical connector 131 contacts the small second pad 142, and the small second pad 142 is pressed in.

Here, the second pad 142 can enter/leave the hole 141a, and is independent of the first pad 141 in the press-in direction. For this reason, only the second pad 142 is pressed in, and only a restoring force by the displacement of the second spring 153a acts on the second pad 142.

As shown in Fig. 6C, if the multicore optical connector 132 is inserted using the corresponding attachment 108a, since the attachment 108a is designed such that the coupling end face of the optical connector 132 contacts the large first pad 141, the coupling end face of the optical connector 132 contacts the large first pad 141, and the large first pad 141 is pressed in.

Here, if the flange of the second pad 142 engages with the stopper on the bottom portion of the hole 141a to press down the first pad 141, the second pad 142 is also pressed down together with the first pad 141. For this reason, a restoring force by the displacement of the second spring 153a acts on the first pad 141, in addition to the first spring 151a.

As described above, if the single-core optical connector 131 is inserted using the corresponding attachment 108, only the second pad 142 is pressed in, and only the restoring force by the displacement of the second spring 153a acts. If the multicore optical connector 132 is inserted using the corresponding attachment 108a, the first pad 141 is pressed in together with the second pad 142, and not only the restoring force by the displacement of the first spring 151a but also the restoring force by the displacement of the second spring 153a acts.

As a result, in the optical connector 132, the force of pressing the cleaning element 101 against the coupling end face of the optical connector 132 is larger than in the cleaning state of the optical connector 131. Thus, since a predetermined pressing according to the type of the optical connector can be generated in accordance with the area of the end face of the optical connector, it is possible to appropriately execute cleaning of the coupling end face of the optical connector using the strip-shaped cleaning element.

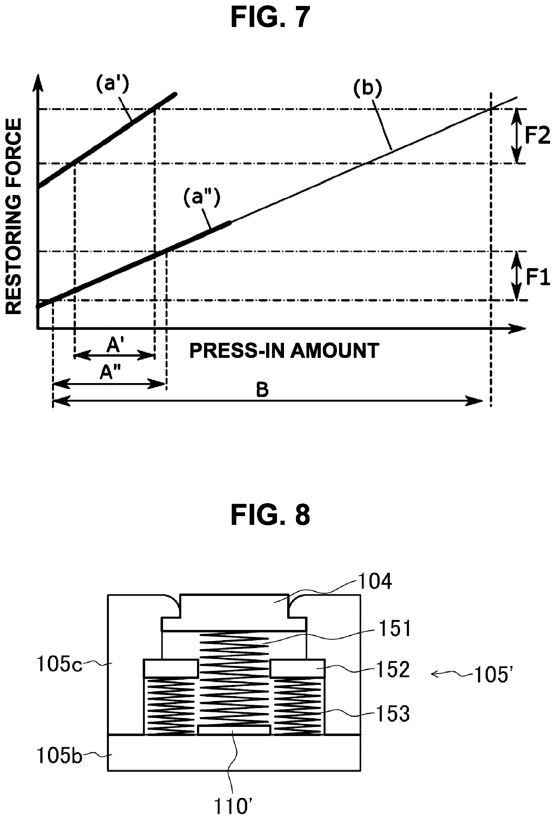

In the above-described configuration using large and small pads, the relationship of the restoring force with respect to the press-in amount is represented by two lines each having an inclination according to the spring constant, as indicated by (a') and (a'') in Fig. 7. In Fig. 7, (a') represents the relationship of the restoring force with respect to the press-in amount in a case where the first pad 141 is used. In Fig. 7, (a'') represents the relationship of the restoring force with respect to the press-in amount in a case where the second pad 142 is used. Note that (b) in Fig. 7 represents the relationship of the restoring force with respect to the press-in amount in a configuration in which only the second spring 153a is used.

Also, A' in Fig. 7 indicates a press-in amount in a case where the first pad 141 is used, and A'' in Fig. 7 indicates a press-in amount in a case where the second pad 142 is used. Also, B in Fig. 7 indicates a press-in amount in a case where only the second spring 153a is used.

In Fig. 7, F1 represents the appropriate range of the force of pressing the cleaning element 101 by the second pad 142 against the coupling end face of the single-core optical connector 131. F2 represents the appropriate range of the force of pressing the cleaning element 101 by the first pad 141 against the coupling end face of the multicore optical connector 132.

In the configuration described with reference to Fig. 3 in which two springs are used for the same pad, a serial operation starting from a small restoring force for displacement and leaping to a larger restoring force in the midway is performed. On the other hand, in the configuration described with reference to Fig. 6A in which large and small pads are used, two lines for small and large restoring forces exist from the beginning. In the configuration using large and small pads, a parallel operation of extracting one characteristic by selecting the pad to be used by the attachment is performed.

Even in the configuration using large and small pads, the spring constant of each spring or pre-tension for generating a restoring force from the initial state by contracting a spring in advance is appropriately set, thereby making a press-in amount smaller, as indicated by A' or A'', than the press-in amount B in a case where only a single spring is used. This also makes it possible to decrease the thickness of the pad. Furthermore, as is apparent from comparison of Figs. 5 and 7, in the configuration using large and small pads, as compared to the configuration in which two springs are used for the same pad, the connector is pressed to a plurality of positions, but restoring force characteristics can separately be set for the optical connector 131 and the optical connector 132 from the early stage of displacement. For this reason, the difference of the press-in amount by the connector can be made smaller.

Another example of the sensor mechanism will be described next with reference to Fig. 8. An example of the sensor mechanism adapted to the pressing mechanism 105' using one pad will be described below. The sensor mechanism can be formed by a film-shaped pressure sensor 110' that measures a pressure that the pressing mechanism 105' receives when the pad 104 is pressed in. The pressure sensor 110' is a sensor configured to detect a pressure based on a change of a physical value such as a resistance caused by application of a pressure. The pressure sensor 110' can be arranged, for example, between the upper surface of the base seat 105b and the lower end of the first spring 151. Alternatively, the pressure sensor 110' can be arranged between the lower-side bottom surface of the base seat 105b (pressing mechanism 105) and the support base of the base seat 105b. If the first spring 151 is formed by a plurality of springs, a base seat (not shown) common to the plurality of first springs 151 is arranged between the lower ends of the plurality of first springs 151 and the pressure sensor 110', thereby detecting the resultant force of restoring forces generated by the plurality of first springs 151 by the pressure sensor.

If the pad 104 is pressed in, the pressure sensor 110' detects a restoring force corresponding to the displacement of the first spring 151. The output of the pressure sensor 110' is input to the controller 111 described with reference to Fig. 1A. For example, if the pressure sensor 110' is a sensor that detects a pressure as a change of an electric resistance, the controller 111 includes a circuit that applies a voltage to the pressure sensor 110', an A/D converter that detects the voltage applied to the pressure sensor 110', and the like, and the displacement of the first spring 151 can be obtained by converting it to a voltage.

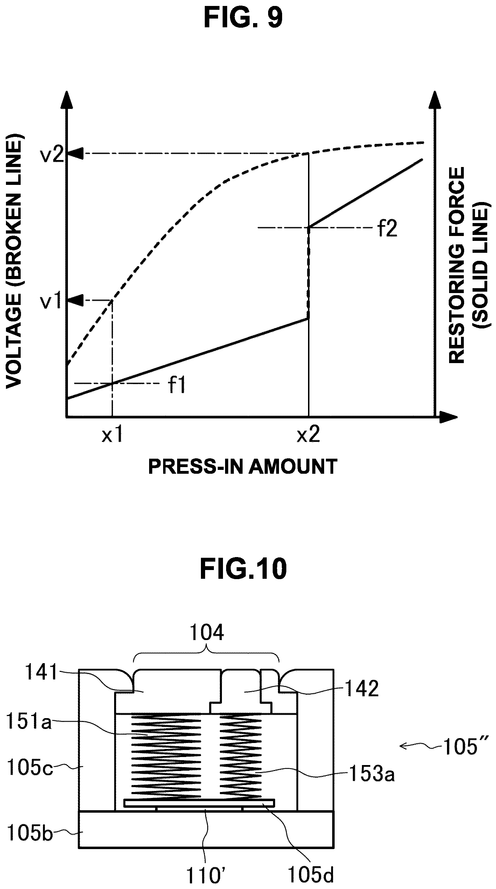

If the voltage from the pressure sensor 110' is inspected while changing the press-in amount of the pad 104, a change indicated by a broken line in Fig. 9 is obtained. The broken line shown in Fig. 9 represents the relationship between the displacement of the first spring 151 corresponding to the press-in amount of the pad 104 and the voltage obtained by the pressure sensor 110'. Also, a solid line shown in Fig. 9 represents the relationship of a restoring force of two springs with respect to the press-in amount of the pad 104. A displacement x1 corresponding to an appropriate pressing lower limit f1 for a single-core optical connector and a voltage v1 of the pressure sensor 110' at this time can be known from the graph shown in Fig. 9. Similarly, a displacement x2 corresponding to an appropriate pressing lower limit f2 for a multicore optical connector and a voltage v2 of the pressure sensor 110' at this time can be known.

The above-described voltages v1 and v2 are stored in the controller 111. For example, if a single-core optical connector is pressed in, and the voltage v1 is detected, the controller 111 activates the cleaning element traveling mechanism 109. Thus, winding of the cleaning element 101 by the winding reel 103 is started, the cleaning element 101 travels, and the coupling end face of the single-core optical connector is rubbed and cleaned by the cleaning element 101 within the appropriate pressing range.

Also, for example, if a multicore optical connector is pressed in, and the voltage v2 is detected, the controller 111 activates the cleaning element traveling mechanism 109. Thus, winding of the cleaning element 101 by the winding reel 103 is started, the cleaning element 101 travels, and the coupling end face of the multicore optical connector is rubbed and cleaned by the cleaning element 101 within the appropriate pressing range.

An example of the sensor mechanism adapted to the pressing mechanism 105'' using two pads will be described next with reference to Fig. 10. The sensor mechanism can be formed by the film-shaped pressure sensor 110' that measures a pressure that the pressing mechanism 105'' receives when the first pad 141 and the second pad 142 are pressed in. The pressure sensor 110' can be arranged, for example, between the upper surface of the base seat 105b and the lower surface of a spacer plate 105d common to the first spring 151a and the second spring 153a. If the first spring or the second spring is formed by a plurality of springs, the spacer plate 105d can be used commonly to all or some of these. Alternatively, the pressure sensor 110' can be arranged between the lower-side bottom surface of the base seat 105b (pressing mechanism 105) and the support base of the base seat 105b.

If the first pad 141 or the second pad 142 is pressed in, a resultant force of restoring forces corresponding to the displacements of the first springs 151a or the second springs 153a is detected by the pressure sensor 110'. The output of the pressure sensor 110' is input to the controller 111 described with reference to Fig. 1A. For example, if the pressure sensor 110' is a sensor that detects a pressure as a change of an electric resistance, the controller 111 includes a circuit that applies a voltage to the pressure sensor 110', an A/D converter that detects the voltage applied to the pressure sensor 110', and the like, and the resultant force of restoring forces can be obtained by converting it to a voltage.

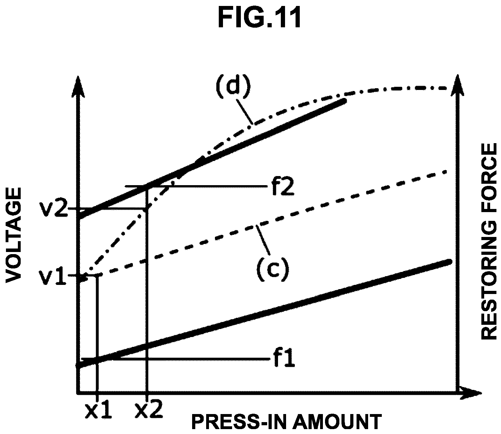

Concerning the second pad 142, if the voltage from the pressure sensor 110' is inspected while changing the press-in amount, a change indicated by a broken line (c) in Fig. 11 is obtained. The broken line (c) shown in Fig. 11 represents the relationship between the displacement of the second spring 153a corresponding to the press-in amount of the second pad 142 and the voltage obtained by the pressure sensor 110'.

Similarly, concerning the first pad 141, if the voltage from the pressure sensor 110' is inspected while changing the press-in amount, a change indicated by an alternate long and short dashed line (d) in Fig. 11 is obtained. The alternate long and short dashed line (d) shown in Fig. 11 represents the relationship between the displacements simultaneously applied to the first spring 151a and the second spring 153a corresponding to the press-in amount of the first pad 141 and the voltage obtained by the pressure sensor 110'.

Also, a solid line shown in Fig. 11 represents the relationship of the restoring force of the first spring 151a and the second spring 153a with respect to the press-in amount of each of the first pad 141 and the second pad 142. The displacement x1 corresponding to the appropriate pressing lower limit f1 for a single-core optical connector and the voltage v1 of the pressure sensor 110' at this time can be known from the graph shown in Fig. 11. Similarly, the displacement x2 corresponding to the appropriate pressing lower limit f2 for a multicore optical connector and the voltage v2 of the pressure sensor 110' at this time can be known.

The above-described voltages v1 and v2 are stored in the controller 111. For example, if a single-core optical connector is pressed in, and the voltage v1 is detected, the controller 111 activates the cleaning element traveling mechanism 109. Thus, winding of the cleaning element 101 by the winding reel 103 is started, the cleaning element 101 travels, and the coupling end face of the single-core optical connector is rubbed and cleaned by the cleaning element 101 within the appropriate pressing range.

Also, for example, if a multicore optical connector is pressed in, and the voltage v2 is detected, the controller 111 activates the cleaning element traveling mechanism 109. Thus, winding of the cleaning element 101 by the winding reel 103 is started, the cleaning element 101 travels, and the coupling end face of the multicore optical connector is rubbed and cleaned by the cleaning element 101 within the appropriate pressing range.

As for the difference between the optical connectors, for example, these can automatically be discriminated by providing an electrical or mechanical identifier on each of the corresponding attachments. Hence, if a displacement detector using the pressure sensor 110' is used, cleaning can be performed anytime within the appropriate pressing range according to each connector.

Note that in the above description, to simplify the explanation, connectors are roughly classified into two types, a single-core optical connector and a multicore optical connector. Single-core optical connectors also include an LC connector and an SC connector. Hence, it goes without saying that the same explanation as described above can be applied if, for more appropriate adjustment, when a plurality of detection states of the sensor mechanism are provided for the LC connector and the SC connector.

As described above, according to the present invention, since an attachment configured to increase the amount of insertion of the end face side of the optical connector is used such that a predetermined pressing according to the type of the optical connector is generated in accordance with the area of the end face of the optical connector, it is possible to appropriately execute cleaning of the coupling end face of the optical connector using the strip-shaped cleaning element.

Some or all of the above-described embodiments can also be described as in the following supplementary notes but are not limited to the followings.

### [Supplementary Note 1]

There is provided an optical connector cleaning device comprising a strip-shaped cleaning element, a supply reel around which the cleaning element is wound, a winding reel configured to wind up the cleaning element, a pad for pressing the cleaning element extending from the supply reel to the winding reel against an end face of an optical connector that is a cleaning target, a pressing mechanism formed by an elastic body configured to press the pad toward an end face of the optical connector, a housing accommodating the supply reel, the winding reel, the pad, and the pressing mechanism, an opening into which an end face side of the optical connector is inserted, the opening formed in the housing, an attachment arranged in the opening and configured to mechanically determine an amount of insertion of the pad pressed in by the end face of the optical connector such that a pressing that the end face of the optical connector receives from the pad falls within a predetermined range in accordance with a type of the optical connector, a cleaning element traveling mechanism configured to make the cleaning element travel, a sensor mechanism configured to detect that a displacement of the pad pressed in by the optical connector inserted from the opening is set in a state in which a predetermined pressing according to the type of the inserted optical connector is generated, and a controller configured to activate the cleaning element traveling mechanism if the sensor mechanism detects that the displacement of the pad that is pressed in has reached the state in which the predetermined pressing according to the type of the inserted optical connector is generated.

### [Supplementary Note 2]

In the optical connector cleaning device according to Supplementary Note 1, the sensor mechanism is formed by a pressure sensor configured to measure a pressure that the pressing mechanism receives when the pad is pressed in.

### [Supplementary Note 3]

In the optical connector cleaning device according to Supplementary Note 1, the sensor mechanism is formed by a position detection sensor configured to detect a position in a direction in which the pad is pressed in.

### [Supplementary Note 4]

In the optical connector cleaning device according to Supplementary Notes 1 to 3, the pressing mechanism comprises a first spring configured to press the pad toward the end face of the optical connector, a plate configured to contact a back surface of the pad if the pad that is pressed in reaches a set position, and a second spring configured to press the plate toward the end face of the optical connector.

### [Supplementary Note 5]

In the optical connector cleaning device according to any one of Supplementary Notes 1 to 3, the pressing mechanism comprises the pad formed by a large first pad and a small second pad, a first spring configured to press the first pad toward the end face of the optical connector, and a second spring configured to press the second pad toward the end face of the optical connector, the second pad can be pressed down independently of the first pad, and the second pad is pressed down along with press-down of the first pad.

### [Supplementary Note 6]

In the optical connector cleaning device according to Supplementary Note 4 or 5, the first spring comprises a plurality of first springs.

### [Supplementary Note 7]

In the optical connector cleaning device according to any one of Supplementary Notes 4 to 6, the second spring comprises a plurality of second springs.

Note that the present invention is not limited to the above-described embodiments, and it is obvious that many modifications and combinations can be implemented by those having ordinary knowledge in this field within the technical scope of the present invention.

### Explanation of the Reference Numerals and Signs

101...cleaning element, 102...supply reel, 103...winding reel, 104...pad, 105...pressing mechanism, 105a...elastic body, 105b...base seat, 105c...cover, 106...housing, 107...opening, 108...attachment, 109...cleaning element traveling mechanism, 109a...worm, 109b...motor, 110...sensor mechanism, 110a...bar, 110b...first detection position, 110c...second detection position, 111...controller, 131...optical connector

## Claims

1. An optical connector cleaning device comprising:
a strip-shaped cleaning element;
a supply reel around which the cleaning element is wound;
a winding reel configured to wind up the cleaning element;
a pad for pressing the cleaning element extending from the supply reel to the winding reel against an end face of an optical connector that is a cleaning target;
a pressing mechanism formed by an elastic body configured to press the pad toward an end face of the optical connector;
a housing accommodating the supply reel, the winding reel, the pad, and the pressing mechanism;
an opening into which an end face side of the optical connector is inserted, the opening formed in the housing;
an attachment arranged in the opening and configured to mechanically determine an amount of insertion of the pad pressed in by the end face of the optical connector such that a pressing that the end face of the optical connector receives from the pad falls within a predetermined range in accordance with a type of the optical connector;
a cleaning element traveling mechanism configured to make the cleaning element travel;
a sensor mechanism configured to detect that a displacement of the pad pressed in by the optical connector inserted from the opening is set in a state in which a predetermined pressing according to the type of the inserted optical connector is generated; and
a controller configured to activate the cleaning element traveling mechanism if the sensor mechanism detects that the displacement of the pad that is pressed in has reached the state in which the predetermined pressing according to the type of the inserted optical connector is generated.

2. The optical connector cleaning device according to claim 1, wherein
the sensor mechanism is formed by a pressure sensor configured to measure a pressure that the pressing mechanism receives when the pad is pressed in.

3. The optical connector cleaning device according to claim 1, wherein
the sensor mechanism is formed by a position detection sensor configured to detect a position in a direction in which the pad is pressed in.

4. The optical connector cleaning device according to claim 1, wherein
the pressing mechanism comprises:
a first spring configured to press the pad toward the end face of the optical connector;
a plate configured to contact a back surface of the pad if the pad that is pressed in reaches a set position; and
a second spring configured to press the plate toward the end face of the optical connector.

5. The optical connector cleaning device according to claim 1, wherein
the pressing mechanism comprises:
the pad formed by a large first pad and a small second pad;
a first spring configured to press the first pad toward the end face of the optical connector; and
a second spring configured to press the second pad toward the end face of the optical connector,
the second pad can be pressed down independently of the first pad, and
the second pad is pressed down along with press-down of the first pad.

6. The optical connector cleaning device according to claim 4 or 5, wherein
the first spring comprises a plurality of first springs.

7. The optical connector cleaning device according to claim 4 or 5, wherein
the second spring comprises a plurality of second springs.
